# EUROPEAN PATENT SPECIFICATION

(11) **EP 1 304 789 B1**
(45) Date of publication and mention of the grant of the patent: **17.12.2008**
(21) Application number: 02022749.2
(22) Date of filing: 11.10.2002
(51) Int. Cl.: H02K 15/00

(54) **Apparatus and method for forming winding heads in dynamo-electric machine cores**
Verfahren und Vorrichtung zur Formung von Wickelköpfen am Körper einer elektrodynamischen Maschine
Procédé et dispositif de formage de chignons sur le noyau d'une machine dynamo-électrique

(30) Priority: 12.10.2001 US 328973 P
(43) Date of publication of application: 23.04.2003
(73) Proprietor: ATOP S.p.A., 50021 Barberino Val d'Elsa (Firenze) (IT)
(72) Inventor: Pelletta, Massimo, 15058 Viguzzolo (Alessandria) (IT)
(74) Representative: Lotti, Giorgio

(56) References cited:
- EP-A- 0 031 739
- US-A- 3 874 056
- US-A- 3 913 373
- US-A- 5 235 738
- US-A- 6 155 094

## Description

### Background of the Invention

The present specification concerns solutions for forming coils wound onto certain types of cores for dynamo-electric machines. More particularly, the solutions are useful for definite positioning and compacting of coil portions which extend beyond the axial ends of a dynamo-electric machine core, such as is required, for example, in manufacturing alternator stators.

This positioning and compacting of the coil portions is generally referred to as forming. According to the prior art, such forming operations are obtained by passing an arbor through the central aperture of the machine core and aligning the pushers of the arbor with the external coil portions. These pushers are capable of moving in a radial direction relative to the circumference of the machine core to push against the external coil portions. In general, the pushers compress the external coil portions against a circular abutment member placed at a predetermined radial position around the external coil portions. The amount of movement of the pushers in the radial direction and the compression against the circular abutment member determines the required forming of the external coil portions.

The pushers in a conventional forming apparatus are positioned extremely close to each other in an attempt to produce uniform compression against the abutment member. Regardless of such efforts, however, forming may not be uniformly obtained. Particularly, some areas of the external coil portions may not be sufficiently expanded in the radial direction and present the unwanted result of extending toward the central opening of the machine core. Another unwanted result may be a lack of uniformity in the formed thickness of the external coil portions, where some areas are successfully expanded in the radial direction and brought to a desired thickness and other areas are not.

US 5,235,738 provides a solution for obviating these deficiencies by foreseeing inner and outer presser shoes for forming the coils. An actuation mechanism of US 5,235,738 drives the inner shoes 20 radially outwardly, whilst the outer shoes are moved outwardly by pushing on behalf of the inner shoes. Inward radial movement of both the inner and outer shoes occurs by means of garter springs.

### Summary of the Invention

In view of the foregoing, also the present invention proposes to reduce the occurrence of such unwanted results using a forming apparatus according to claim 1 having a greater number of pushers to form the coils in a machine core of the same size having coils of the same dimensions. By using a greater number of pushers to form the external coil portions, the present invention improves the uniformity of the compression against the abutment member which surrounds the external coil portions.

In order to increase the number of pushers operating within the same available machine core space, the present invention adopts a space saving mechanism for radially driving and retracting the pushers. To that end, two series of pushers are alternately arranged around a central axis. The first series of pushers is capable of being driven radially outwardly and being retracted radially inwardly by the actuation mechanism, while the second series of pushers is only capable of being driven radially outwardly by that mechanism. The first and second series of pushers are provided with overlapping protrusions and recesses, respectively, which enable the radially inward retraction of the first series of pushers to provide the same radially inward retraction for the second series of pushers. Therefore, the required number of dual-direction connections to the actuation mechanism is reduced, and a greater number of pushers may be used within the same core space to provide better uniformity in forming.

### Brief Description of the Drawings

FIG. 1 is a perspective view of an illustrative stator core 10 wound with one representative undulated coil C;
FIG. 2 is a fragmentary view from direction 2 of FIG. 1 of a stator core having all the required coils in the condition of being definitely positioned in radial direction R with thickness 11 in accordance with an illustrative embodiment of the present invention;
FIG. 3 is a view from direction 3-3 of FIG. 2 of pushers in a radially innermost condition of operation in accordance with the depicted illustrative embodiment of the invention (FIG. 3 and subsequent FIGS. show the coils on the core in a greatly simplified representation);
FIG. 4 is a view similar to FIG. 3 showing pushers that have been moved radially outwardly to press coil portions C' to a required thickness 11 in accordance with the invention;
FIG. 4a is a magnified representation of area 4a in FIG. 4;
FIG. 5 is a partial sectional view (taken generally along the line 5-5 in FIG. 4, but prior to full radially outward expansion of the annular array of pushers) showing the mechanism for positioning and moving pushers 31 to simultaneously form the coil portions on both ends of the stator core in accordance with the depicted illustrative embodiment of the invention;
FIG. 6 is a sectional view taken generally along the line 6-6 in FIG. 5;
FIG. 7 is similar to FIG. 5, but after radially outward expansion of the annular array of pushers;
FIG. 8 is a partial sectional view taken generally along the line 8-8 in FIG. 4, but prior to full radially outward expansion of the annular array of pushers; FIG. 8 is generally like FIG. 5, but for pushers 30;
FIG. 9 is similar to FIG. 8, but after radially outward expansion of the annular array of pushers; and
FIG. 10 is a simplified view from direction 10-10 of FIG. 6 of the forming apparatus without the stator core and the abutment member in accordance with the depicted illustrative embodiment of the invention.

### Detailed Description of the Preferred Embodiments

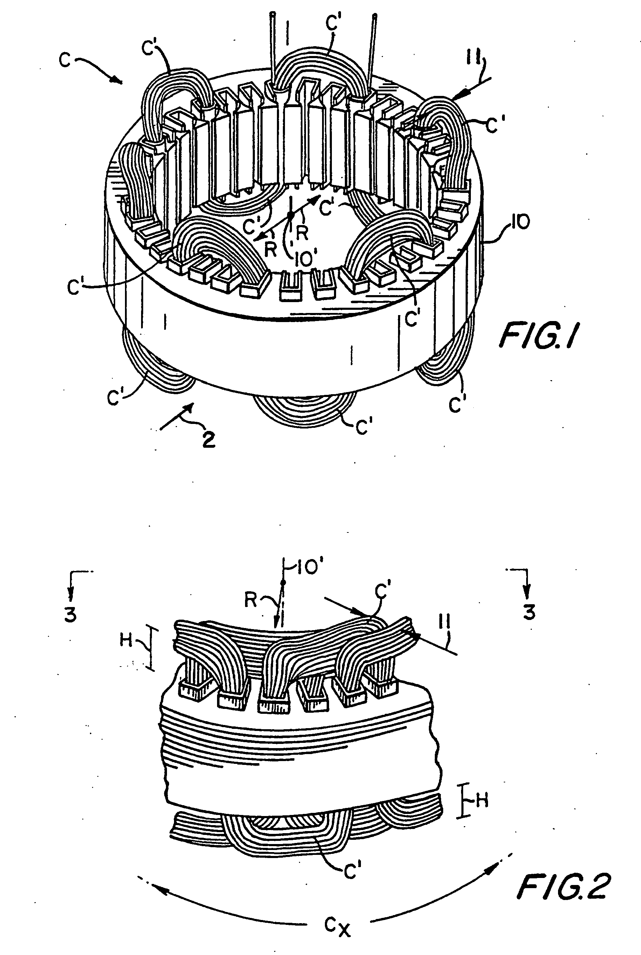

With initial reference to FIG. 1, the invention is concerned with positioning external portions C' of coils in radial direction R, and compacting the same external portions C' to a predetermined thickness 11. Thickness 11 is transverse to longitudinal axis 10' of the stator core, as is shown in FIG. 1. For sake of clarity, FIG. 1 shows only one of the undulated coils C in the stator core. In practice, however, the positioning and compacting requirements, described previously in terms of positioning in radial direction R and reaching thickness 11, need to be accomplished through a single operation for all the coils present in the stator core (see, for example, FIG. 2).

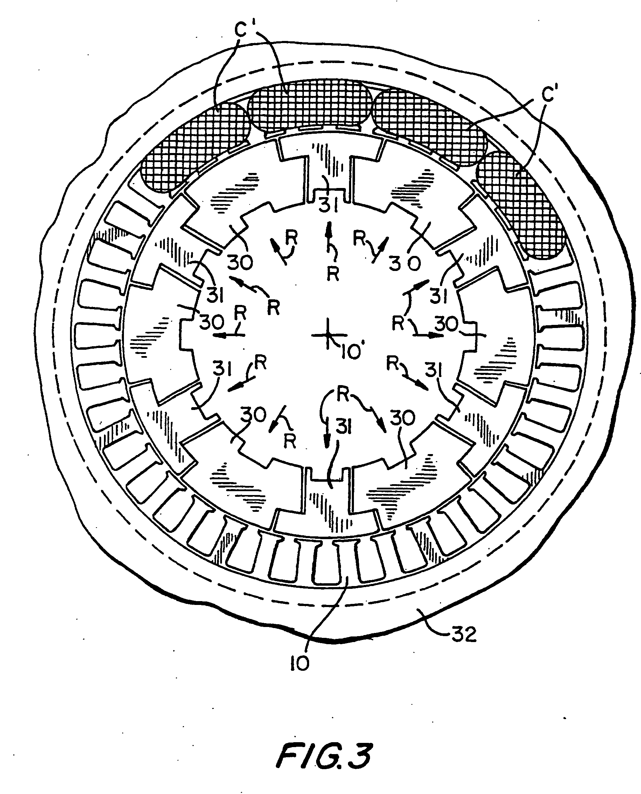

FIG. 3 is a view from direction 3-3 of FIG. 2, augmented with an illustrative embodiment of the annular array of pushers of the present invention, shown in a certain condition of operation. With reference to FIG. 3, the pushers belong to two series. The pushers of the first series are numbered 30, while the pushers of the second series are numbered 31. As shown, pushers 30 of the first series are placed around axis 10' at equal angular distances from each other. Similarly, pushers 31 of the second series are interposed between the pushers of the first series, and are consequently also at equal angular distances from each other. Each pusher 30 or 31 is capable of moving along a respective radial direction R of the stator, like directions R shown in FIGS. 1 and 2. The stage of operation shown in FIG. 3 corresponds to a situation in which the pushers have been inserted into the stator core to become aligned with the external portions C' of the coils at the end of the stator core. In other words, the pushers have moved into the stator core, are aligned with coil portions C', and are ready to move in radially outward directions R to perform the forming operation.

Pushers exactly like those shown in FIG. 3 are simultaneously positioned at the opposite end of the stator core and are also ready to move in radially outward directions R to perform the forming operation of coil portions C' located on the opposite end of the stator core. As will be more fully explained in the following, the pushers 30 and 31 present on one end of the stator core, like those shown in FIG. 3, are duplicated on the opposite end of the stator core. With reference to FIG. 3, the mechanisms for moving and carrying the pushers 30/31 have been omitted for sake of clarity, although they will be represented in later FIGS.

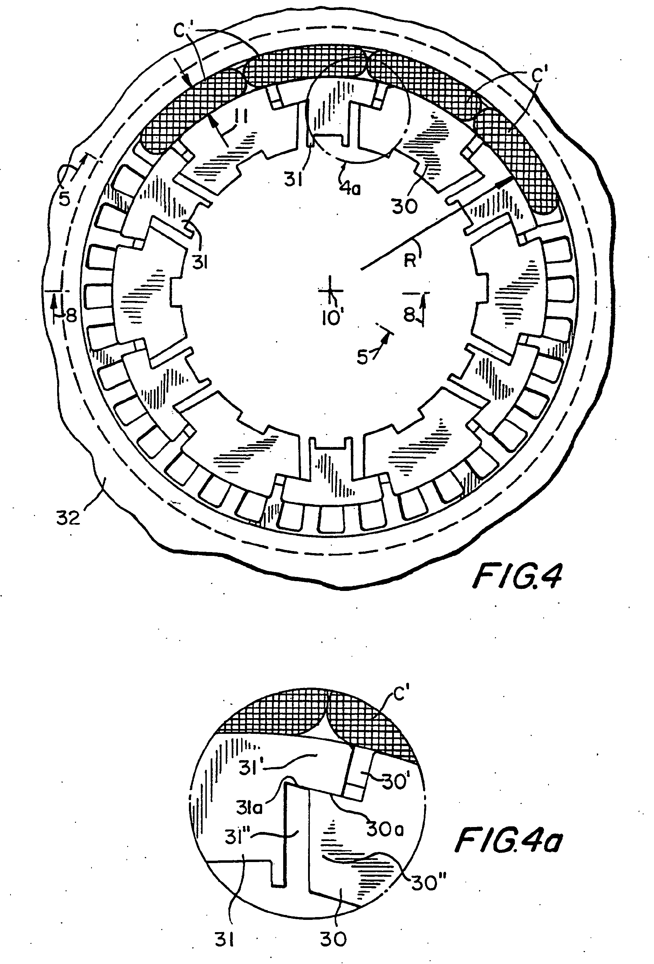

FIG. 4 is a view similar to FIG. 3 showing the pushers 30/31 in a stage where they have been moved outwardly along radial directions R, and have pressed the coil portions C' to a required thickness 11. In both FIGS. 3 and 4, stationary abutment member 32 has been schematically represented around the complete circular extension of the coil portions. The abutment member reacts to the pressing forces with which the pushers 30/31 are pressing on the coil portions C' to accomplish forming. Abutment member 32 has been schematically represented as a single circular member, although its actual configuration may be a combination of sector members individually positioned around the coil portions to form the circular shape shown.

As shown in FIG. 4a, which is a magnified representation of area 4a of FIG. 4, the pushers 30/31 are configured to fit very close to each other. With reference to FIG. 4a, representative pusher 31 is provided with portion 31' which fits into a complementary recess 30' of representative, angularly adjacent pusher 30. In addition, portion 30" of pusher 30 fits into a complementary recess 31" of pusher 31. A comparison between FIGS. 3 and 4 shows how these portions and recesses are displaced laterally with respect to each other when the pushers are moved along their respective radial directions R.

Surface 30a of pusher 30 and surface 31a of pusher 31, which extend between the previously described recesses and portions, are inclined and transverse to radial directions R to engage extensively against each other when the pushers are moved inwardly opposite radial directions R (i.e., toward the center of the stator core). More particularly, the engagement of surfaces 31a and 30a will cause the radially inward movement of pushers 31 to move pushers 30 inwardly toward the center of the stator core along radial directions R after forming of the coil portions C' has occurred.

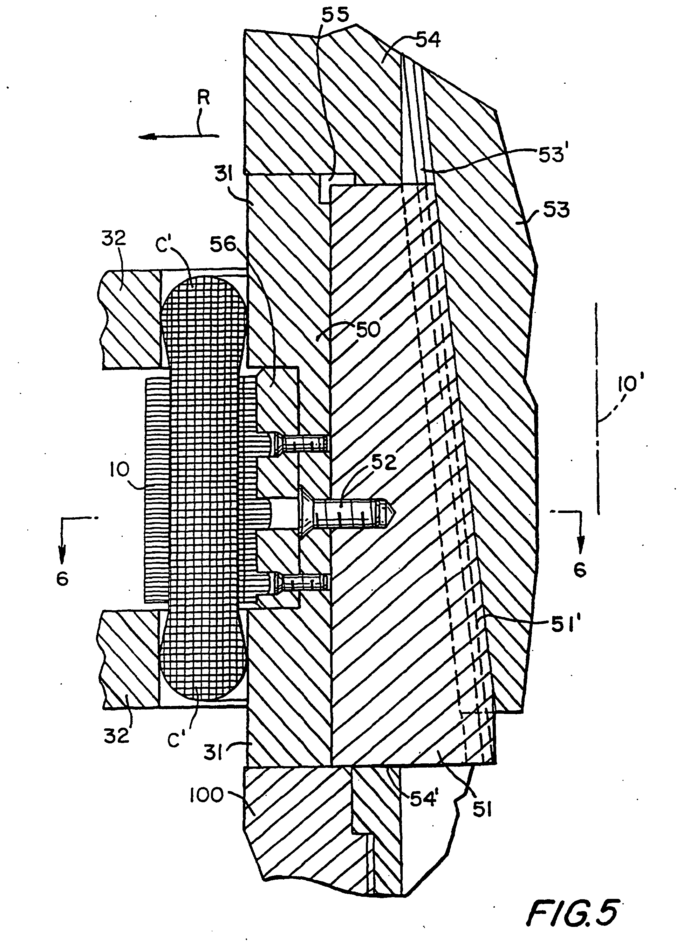

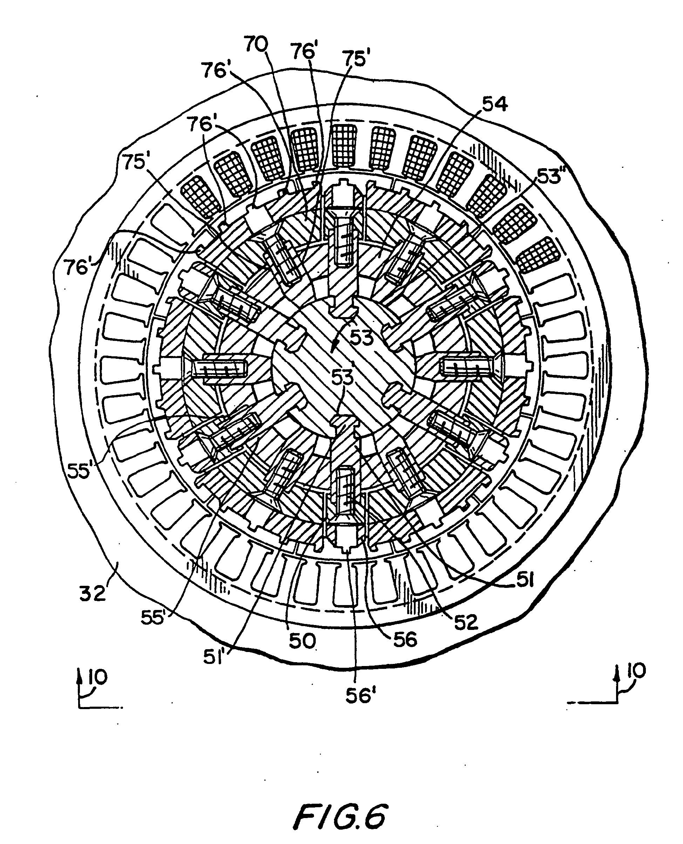

FIG. 5 is a partial sectional view as seen from direction 5-5 of FIG. 4 showing the stage of operation represented in FIG. 3. Furthermore, FIG. 5 shows parts which have been omitted in FIGS. 3 and 4 for sake of clarity. FIG. 5 is particularly relevant for showing the mechanisms for positioning and moving pushers 31 for simultaneously forming the coil portions on both ends of the stator core. More particularly, pushers 31 are portions of a single member 50. In other words, a single member 50 has two pusher portions 31 to simultaneously form the coil portions C' on opposite ends of the stator core. FIG. 5 shows the mechanism used for moving pusher portion 31 of one angular sector of the stator core (i.e., for one of the pushers 31 shown in FIGS. 3 and 4). As will be more apparent from the rest of the FIGS., particularly from the combination of FIGS. 5 and 6, each set of pushers 31 in an angular sector of the stator core has a respective moving mechanism identical to that depicted in FIG. 5.

FIG. 6 is a section view as seen from direction 6-6 of FIG. 5 showing that mechanisms like that shown in FIG. 5 are present for all pushers 31.

With reference to FIGS. 5 and 6, single member 50 is fixed to slide 51 by means of bolt 52. Slide 51 has an inclined key portion 51' which is received in an inclined keyway 53' of cone member 53. Slide 51 is supported by ledge 54' of support member 54. Each slide 51 is capable of moving in an associated radial direction R for forming the coil portions as shown in FIG. 4. Each slide 51 is also capable of moving oppositely to the associated radial direction R in order return to the position shown in FIGS. 3 and 5 after the forming operation has occurred. During these movements, each slide 51 is guided by sides 55' of slits 55 present on support member 54. Ledge 54' of support member 54 corresponds to a bottom side of slit 55. Single member 50 is also provided with a pushing member 56 located between pusher portions 31. The pushing member is fixed in a recess of single member 50 by bolts (shown but not numbered). Pushing member 56 is provided with protrusions 56' capable of passing through slot openings of the stator core to press on portions of the coils present in the stator core slots. FIG. 5 is actually showing the mechanism for moving the pusher portions 31 (shown in the rest position prior to moving, or immediately after starting to move in the radially outward direction) to form coil portions C'.

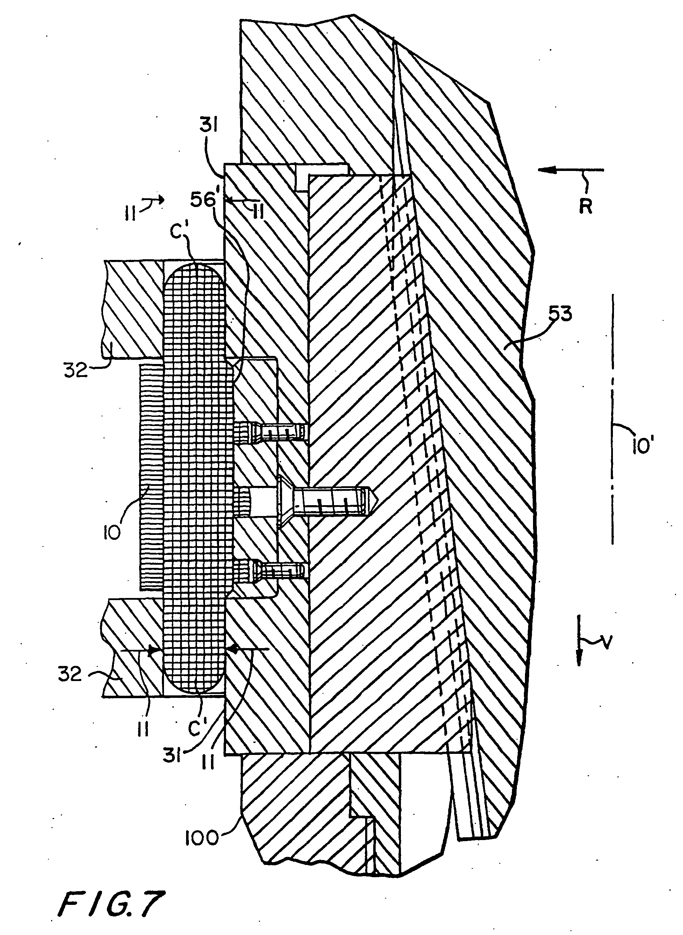

FIG. 7 is a view similar to FIG. 5, although showing pusher portions 31 pressing on coil portions C' after movement of slide 51 has occurred in radial direction R. Radial movement of slide 51 is caused by movement of cone member 53 in vertical direction V. Movement of cone member 53 in vertical direction V causes the surfaces of keyway 53' to push on the surfaces of key portion 51' in radial direction R, thereby causing pusher portions 31 to move in radial direction R and accomplish forming of coil portions C'. FIG. 7 also shows that protrusions 56' of pushing member 55 are pressing on and compacting the coil portion present within the slots of the stator core as a result of the previously described movement in radial direction R.

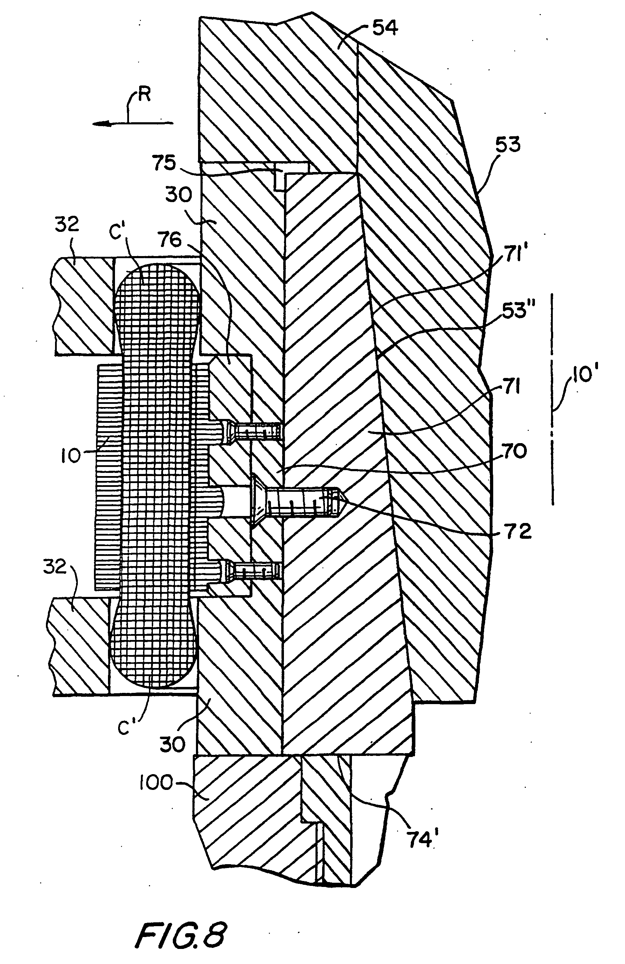

FIG. 8 is a partial sectional view as seen from direction 8-8 of FIG. 4, although showing the operation stage of FIG. 3. Furthermore, FIG. 8 also shows parts which have been omitted in FIGS. 3 and 4 for sake of clarity. FIG. 8 is particularly relevant for illustrating the mechanisms used to position and move pushers 30 in radial direction R. Again, pushers 30 are portions of a single member 70. In other words, a single member 70 will have two pusher portions 30 to simultaneously form the coil portions C' on opposite ends of the stator core. FIG. 8 shows the mechanism used for moving pusher portions 30 of one angular sector of the stator core (i.e., for one of the pushers 30 shown in FIGS. 3 and 4). As will be more apparent from the rest of the FIGS., particularly from FIG. 6, each set of pusher portions 30 of an angular sector of the stator core has a respective moving mechanism identical to that depicted in FIG. 8.

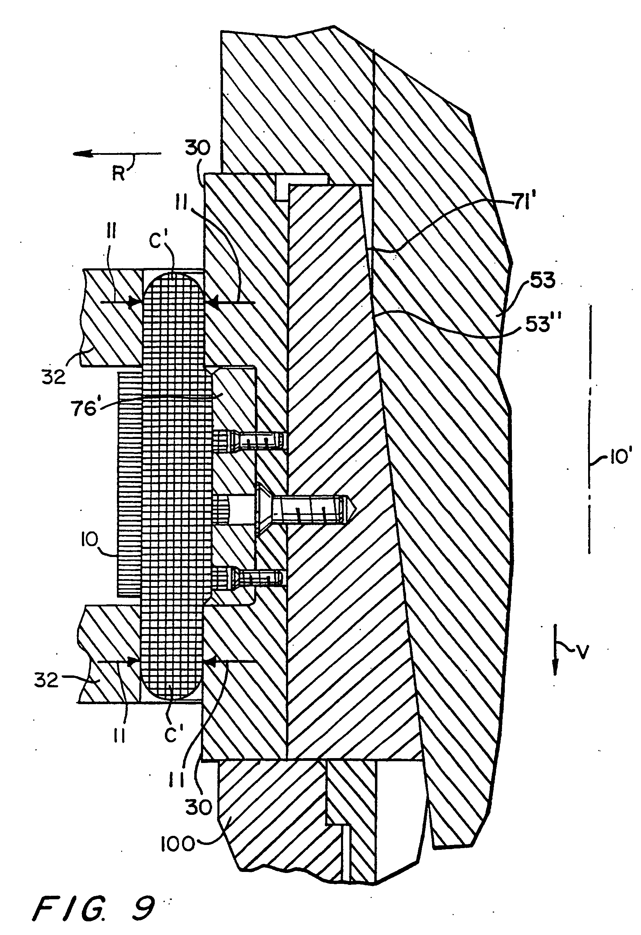

With reference to FIGS. 6 and 8, each single member 70, related to an associated pair of pushers 30, is fixed to slide 71 by means of bolt 72. Slide 71 has an inclined engaging surface 71' which is engaged by an inclined planar surface 53" of cone member 53. Slide 71 is supported by ledge 74' of support member 54. Slide 71 is capable of moving in radial direction R for forming the coil portions as shown in FIG. 4. Slide 71 is also capable of moving oppositely to radial direction R in order to return to the position shown in FIG. 9 after the forming operation has occurred. During these movements, slide 71 is guided by sides 75' of a slit 75 present on support member 54. Ledge 74' of support member 54 corresponds to a bottom side of slit 75. Each single member 70 is also provided with a pushing member 76. Pushing member 76 is provided with numerous protrusions 76' capable of passing through respective slot openings of the stator core in order to press on and compact portions of the coils that are present in stator core slots. FIG. 8 shows the mechanism for moving pusher portions 30 in the rest position prior to moving in radial direction R to form coil portions C', or immediately after starting to move in radial direction R to form coil portions C'.

FIG. 9 is a view similar to FIG. 8, although showing pusher portions 30 pressing on coil portions C' after movement of slide 71 has occurred in radial direction R through movement of cone member 53' in vertical direction V. Movement of cone member 53 in vertical direction V causes planar surface 53" of cone member 53 to push engaging surface 71' of single member 71 in radial direction R, thereby causing pusher portions 31 to move in radial direction R to reach the forming condition shown in FIG. 9. FIG. 9 also shows that protrusions 76' of pushing members 76 are pressing on and compacting the coil portion present within the slots of the stator core as a result of the previously described movement in radial direction R.

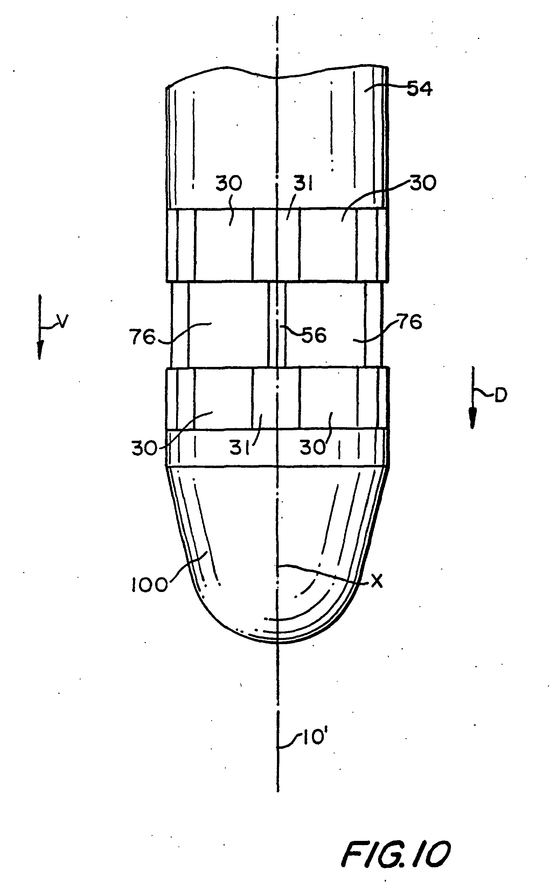

FIG. 10 shows the forming apparatus from direction 10-10 of FIG. 6 without representing the stator core and abutment member 32. FIG. 10 is particularly relevant for showing the configuration of support member 54 which needs to be inserted into the stator core by movement in direction D. Direction D would be parallel to axis 10' of the stator core and axis X of support member 54 would be aligned with axis 10' of the stator core for the insertion to occur. Head 100 is screwed onto the extremity of support member 54. If the external portions of the coils are in the way when the support member is being inserted into the stator core, head 100 would push the external portions outward to facilitate insertion of the support member. At the completion of the movement in direction D to insert support member 54 in the stator core, pushers 30 and 31 need to be aligned with the respective coil portions C'. Once this condition of alignment has been reached, core member 53 can be moved in direction V to cause all the pushers to simultaneously move radially outwardly to reach the forming condition shown in FIGS. 4 and 4a. This simultaneous movement of the pushers is achieved by the mechanisms described with reference to FIGS. 5-9.

Once forming has been reached, as shown in FIG. 4, the pushers are returned to the position shown in FIG. 3 by moving cone member 53 opposite to direction V. This opposite movement of the core member will move pushers 31 radially inwardly toward axis 10' of the stator core due to the keyway 53' and key portion 51' connection described with reference to FIGS. 5 and 6. Pushers 30 are simultaneously moved radially inwardly with pushers 31 toward axis 10' of the stator core due to the engagement of surfaces 31a and 30a, described previously with reference to FIG. 4a.

Based on the above principles, it has been possible to limit the connection of pushers 30 to core member 53 to the engagement of planar surface 53" with engaging surface 71', as described previously with reference to FIGS. 6 and 8. The engagement of planar surface 53" with engaging surface 71' is a connection solution which requires extremely reduced space occupancy on cone member 53, thereby making it possible to include a higher number of pushers within the same available stator core space.

Thus, systems and methods for increasing uniformity in forming operations are provided. Variations and modifications are possible within the scope of the appended claims.

## Claims

1. An apparatus for forming wire coils (C') wound onto a dynamo-electric machine core, comprising:
a first set of pushers (31) and a second set of pushers (30) alternately arranged to form a circular band; an actuation mechanism configured to drive the first and second sets of pushers in a radially outward direction of the circular band to form the wire coils, **characterized in that**
the actuation mechanism is further configured to drive the first set of pushers (31) in a radially inward direction of the circular band to provide a retraction of the second set of pushers (30) in the radially inward direction;
wherein the actuation mechanism comprises a cone shaped member (53) disposed within the central aperture of the circular band, the cone shaped member (53) having keyways (53') along the incline of its outer surface, and configured for motion along a central axis perpendicular to the plane defined by the circular band
wherein inclined keys (51') are fixedly attached to the first set of pushers (31), the inclined keys (51') engaging the keyways (53') in the cone shaped member to translate the motion of the cone shaped member to radial motion of the first set of pushers;
wherein the first set of pushers (31) have protrusions (31') in an angular direction of the circular band that complement recesses (30') in the second set of pushers (30), and wherein the protrusions and recesses are configured relative to each other so that surfaces (31a) of the protrusions engage with surfaces (30a) of the recesses to enable the radially inward motion of the first set of pushers (31) to provide the retraction of the second set of pushers (30) in the radially inward direction.

2. The apparatus of claim 1 wherein the first and second sets of pushers (30, 31) are keystone shaped angular sectors of the circular band.

3. The apparatus of claim 1 wherein the cone shaped member (53) acts on the second set of pushers (30) only to drive the second set of pushers in the radial outward direction

## Patentansprüche

1. Eine Vorrichtung zum Formen von Drahtspulen (C'), welche auf den Kern einer dynamo-elektrischen Maschine gewickelt werden, aufweisend:
einen ersten Satz von Schiebern (31) und einen zweiten Satz von Schiebern (30), welche alternierend angeordnet sind, um ein kreisförmiges Band zu bilden;
ein Betätigungsmechanismus, welcher so konfiguriert ist, dass er die ersten und zweiten Sätze von Schiebern in einer Richtung radial auswärts von dem kreisförmigen Band antreibt, um die Drahtspulen zu formen,
**dadurch gekennzeichnet, dass**
der Betätigungsmechanismus des Weiteren so konfiguriert ist, dass er den ersten Satz von Schiebern (31) in einer radial einwärtigen Richtung von dem kreisförmigen Band antreibt, um ein Zurückziehen des zweiten Satzes von Schiebern (30) in der radial einwärtigen Richtung bereitzustellen;
wobei der Betätigungsmechanismus ein konisch geformtes Mittel (53) aufweist, welches innerhalb einer zentralen Öffnung des kreisförmigen Bandes angeordnet ist, wobei das konisch geformte Mittel (53) Fedemuten (53') entlang der Neigung seiner äußeren Oberfläche aufweist und konfiguriert ist für eine Bewegung entlang einer zentralen Achse rechtwinklig zu der Ebene welche durch das kreisförmige Band definiert wird,
wobei geneigte Federn (51') starr befestigt sind an dem ersten Satz von Schiebern (31), wobei die geneigten Federn (51') in die Federnuten (53') eingreifen, in dem konusförmigen Mittel, um die Bewegung des konusförmigen Mittels umzusetzen in eine radiale Bewegung des ersten Satzes von Schiebern;
wobei der erste Satz von Schiebern (31) Vorsprünge (31') aufweist, in einer abgewinkelten Richtung des kreisförmigen Bandes, welche Ausnehmungen (30') in dem zweiten Satz von Schiebern (30) ergänzen und wobei die Vorsprünge und die Ausnehmungen relativ zueinander konfiguriert sind, so dass die Oberflächen (31a) der Vorsprünge in Eingriff gelangen mit den Oberflächen (30a) der Ausnehmungen, um eine radial einwärtige Bewegung des ersten Satzes von Schiebern (31) zu ermöglichen, um das Zurückziehen des zweiten Satzes von Schiebern (30) in der radial einwärtigen Richtung bereitzustellen.

2. Die Vorrichtung gemäß Anspruch 1, wobei die ersten und zweiten Sätze von Schiebern (30, 31) trapezförmige eckige Sektoren auf dem kreisförmigen Band sind.

3. Die Vorrichtung gemäß Anspruch 1, wobei das konusförmigen Mittel (53) einwirkt auf den zweiten Satz von Schiebern (30) lediglich um den zweiten Satz von Schiebern in die radial auswärtige Richtung zu treiben.

## Revendications

1. Appareil destiné à former des bobines (C') de fil enroulé sur un noyau de machine dynamo-électrique, comprenant :
un premier jeu de poussoirs (31) et un second jeu de poussoirs (30) agencés alternativement pour former une bande circulaire ;
un mécanisme d'actionnement configuré pour entraîner les premier et second jeux de poussoirs dans une direction radiale vers l'extérieur de la bande circulaire afin de former les bobines de fil,
**caractérisé en ce que** :
le mécanisme d'actionnement est en outre configuré pour entraîner le premier jeu de poussoirs (31) dans une direction radiale vers l'intérieur de la bande circulaire afin de produire une rétraction du second jeu de poussoirs (30) dans la direction radiale vers l'intérieur ;
dans lequel le mécanisme d'actionnement comprend un élément en forme de cône (53) disposé à l'intérieur de l'ouverture centrale de la bande circulaire, l'élément en forme de cône (53) ayant des rainures de clavettes (53') le long du pan incliné de sa surface extérieure, et étant configuré pour se déplacer le long d'un axe central perpendiculaire au plan défini par la bande circulaire,
dans lequel les clavettes inclinées (51') sont reliées de manière fixe au premier jeu de poussoirs (31), les clavettes inclinées (51') s'engageant dans les rainures de clavettes (53') dans l'élément en forme de cône afin de transformer le mouvement de l'élément en forme de cône en un mouvement radial du premier jeu de poussoirs ;
dans lequel le premier jeu de poussoirs (31) présente des protubérances (31') dans une direction angulaire de la bande circulaire qui correspondent à des évidements (30') prévus dans le second jeu de poussoirs (30), et dans lequel les protubérances et les évidements sont configurés les uns par rapport aux autres de telle sorte que des surfaces (31a) des protubérances s'engagent avec des surfaces (30a) des évidements afin de permettre le mouvement radial vers l'intérieur du premier jeu de poussoirs (31) en vue de réaliser la rétraction du second jeu de poussoirs (30) dans la direction radiale vers l'intérieur.

2. Appareil selon la revendication 1, dans lequel les premier et second jeux de poussoirs (30, 31) sont des secteurs angulaires en forme de clés de voûte de la bande circulaire.

3. Appareil selon la revendication 1, dans lequel l'élément en forme de cône (53) agit sur le second jeu de poussoirs (30) uniquement pour entraîner le second jeu de poussoirs dans la direction radiale vers l'extérieur.
